**Europäisches Patentamt**

**European Patent Office**

**Office européen des brevets**

(19)

(11) Veröffentlichungsnummer: **0 251 009**
**B1**

(12) **EUROPÄISCHE PATENTSCHRIFT**

(45) Veröffentlichungstag der Patentschrift:
30.05.90

(21) Anmeldenummer: **87108587.4**

(22) Anmeldetag: **15.06.87**

(51) Int. Cl.⁵: **G01P 3/481**, G01P 1/00

(54) **Geberrad für einen Winkelimpulsgeber.**

(30) Priorität: **02.07.86 DE 3622214**

(43) Veröffentlichungstag der Anmeldung:
**07.01.88 Patentblatt 88/1**

(45) Bekanntmachung des Hinweises auf die Patenterteilung:
**30.05.90 Patentblatt 90/22**

(84) Benannte Vertragsstaaten:
**AT BE DE ES FR GB IT NL SE**

(56) Entgegenhaltungen:
**FR-A- 2 316 796**
**US-A- 3 801 845**

(73) Patentinhaber: **Siemens Aktiengesellschaft,
Wittelsbacherplatz 2, D-8000 München 2(DE)**

(72) Erfinder: **Schreiber, Hans, Hoenighausen 1c,
D-8411 Lappersdorf(DE)**

ACTORUM AG

## Beschreibung

Die Erfindung betrifft ein Geberrad für einen Winkelimpulsgeber gemäß Oberbegriff von Anspruch 1.

Ein solches Geberrad ist aus der US-Patentschrift 4 121 112 bekannt. Es wird ein Geberrad mit Eisenzähnen verwendet, wobei an mindestens einem Zahn ein Stück Ferritmaterial festgemacht oder in eine zugehörige Vertiefung eingebracht ist (= Markenzahn). Dieses Ferritmaterial senkt die Wirbelstromverluste des Markenzahns, wodurch Zähne und Markenzähne unterscheidbar sind.

Der obengenannten Patentschrift ist jedoch keine Befestigung des Ferritmaterials an dem Markenzahn zu entnehmen, die den Anforderungen entspricht, die an Festigkeit und Haltbarkeit, insbesondere bei hohen Drehzahlen, sowie an eine wirtschaftliche Fertigung zu stellen sind.

Der Erfindung liegt deshalb die Aufgabe zugrunde, einen einfachen, für eine Serienfertigung geeigneten Aufbau für ein solches Geberrad zu finden, der außerdem unter rauhen Betriebsbedingungen einsetzbar ist.

Die erfindungsgemäße Lösung ist in Anspruch 1 gekennzeichnet. Das Geberrad enthält danach zwei miteinander verbundene Blechteile, nämlich ein Zahnteil und ein Markenteil. Das Zahnteil trägt die in einer Kreisbahn um eine Drehachse angeordneten Zähne, von denen einige Markenzähne sind, die eine Aussparung haben. Das Markenteil weist Markierstücke in Form von Blechstreifen auf, die derart gebogen sind, daß sie in die Aussparungen der Markenzähne des Zahnteils hineinragen.

Das Zahnteil und das Markenteil sind aus unterschiedlichen Materalen gefertigt, so daß sich Zähne und Markenzähne durch ihre Wirbelstromverluste voneinander unterscheiden lassen.

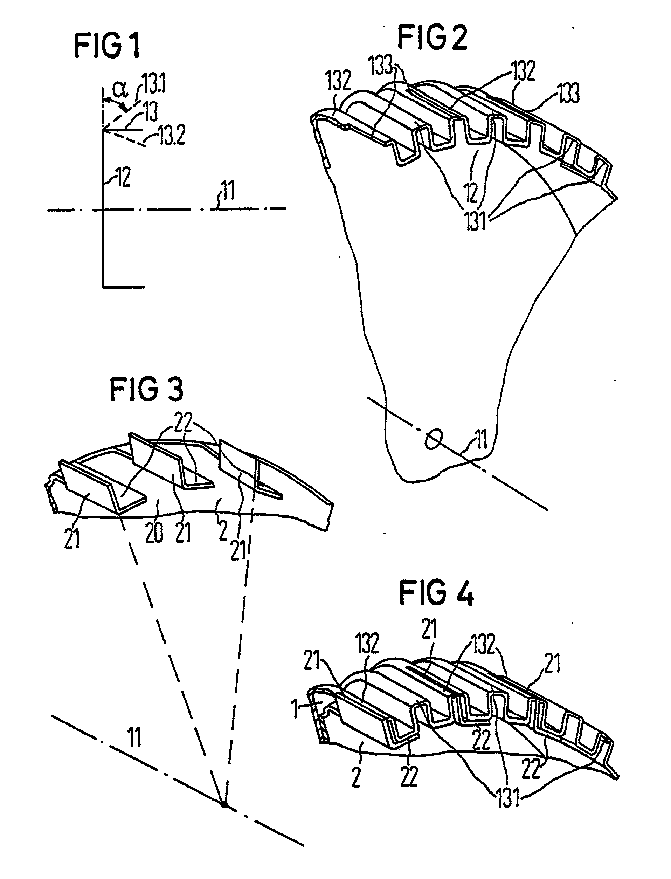

Das Zahnteil gliedert sich in einen Zentralbereich, der je nach Einbauort, eine Kreisfläche oder eine Kegelfläche sein kann. An den Zentralbereich schließt sich koaxial ein Zahnrand an, in dem die Zähne und die Markenzähne liegen. Die Lage des Zahnrands ist durch einen Randwinkel α bestimmt, den er mit einer Ebene senkrecht zur Drehachse einschließt. FIG 1 zeigt schematisch das Zahnteil 1 mit der Drehachse 11, dem Zentralbereich 12 und dem Zahnrand 13 zur Veranschaulichung des Randwinkels α. Der Zahnrand 13 hat darin einen Randwinkel α gleich 90°, d.h. er bildet eine Zylinderfläche mit der Drehachse 11 als Zylinderachse. Der gestrichelt eingezeichnete Zahnrand 13.1 hat einen Randwinkel α zwischen 0° und 90° und der ebenfalls gestrichelt gezeichnete Zahnrand 13.2 einen Randwinkel α zwischen 90° und 180°. Bei diesen beiden Beispielen ist der Zahnrand dann jeweils Teil einer Fläche eines Rotationskörpers mit der Drehachse 11.

Ein bevorzugtes Ausführungsbeispiel der Erfindung wird anhand der Figuren 2 bis 4 näher erläutert. Dabei zeigen:

FIG 1 schematisch ein Zahnteil zur Veranschaulichung des Randwinkels,
FIG 2 einen Ausschnitt aus dem Zahnteil des Ausführungsbeispiels in räumlicher Darstellung,
FIG 3 einen Ausschnitt aus dem zugehörigen Markenteil in räumlicher Darstellung, und
FIG 4 einen Ausschnitt aus dem aus Zahnteil und Markenteil von FIG 2 und 3 zusammengesetzten Geberrad.

FIG 2 zeigt das Zahnteil 1 mit einem kreisrunden Zentralbereich 12 und einem dazu rechtwinkligen Zahnrand 13, der äquidistant über seinen Umfang verteilt Zähne 131 aufweist. Der Zahnrand 13 ist demnach eine Zylinderfläche mit der Drehachse 11 als Zylinderachse. Diejenigen Zähne 131, die in Richtung der Drehachse 11 verlaufende Aussparungen 133 haben, sind Markenzähne 132.

Das Zahnteil 1 entsteht aus einem kreisrunden ebenen Eisenblech, dessen Rand rechtwinklig umgebogen wird. Der umgebogene Rand bildet einen Blechzylinder, aus dem die Zähne 131 durch Weiten des Materials ausgeformt werden. In Richtung der Drehachse 11 gesehen, sind demnach je zwei benachbarte Zähne 131 durch einen U-förmigen Blechsteg verbunden. Die Aussparungen 133 der Markenzähne 132 werden in Richtung der Drehachse 11 eingesägt.

FIG 3 zeigt das Markenteil 2 mit einem kreisrunden Boden 20, an dessen Umfang rechtwinklig abstehende Halatebleche 22 sitzen, die Teilstücke eines Zylinders mit der Drehachse 11 als Zylinderachse sind. Jedes Halteblech 22 trägt einen radial rechtwinklig nach außen stehenden Blechstreifen 21. Die Anzahl n der Haltebleche 22 mit Blechstreifen 21 entspricht der der Markenzähne 132 des Zahnteils 1. Die Positionen der Haltebleche 22 am Umfang des Bodens 20 sind dabei so gewählt, daß die Winkellagen der Blechstreifen 21 den Winkellagen der Aussparungen 133 des Zahnteils 1 entsprechen.

Das Markenteil 2 entsteht aus einem kreisrunden ebenen Trafoblech. Das Trafoblech wird unterteilt durch eine innere Kreislinie um den Mittelpunkt, die der Umfangslinie des Bodens 20 entspricht. Der von der inneren Kreislinie und dem Rand des Trafoblechs gebildete Kreisring wird teilweise ausgestanzt. Entsprechend der Anzahl n sowie den Winkellagen für die Haltebleche 22 mit Blechstreifen 21 (vgl. FIG 3) bleiben hierbei Flächenstücke um die Umfangslinie des Bodens 20 verteilt stehen, die durch radiale Kanten begrenzt sind. Im gleichen Arbeitsgang erhalten diese Flächenstücke je einen Ausschnitt nahe der Umfangslinie des Bodens 20, wobei die Tiefe des Ausschnitts zusammen mit jeweils einer Geraden durch den Mittelpunkt des Trafoblechs und den tiefsten Punkt des Ausschnitts, eine Teilfäche der Flächenstücke definieren. Diese Teilflächen werden rechtwinklig entlang den Geraden aufgeboden. Der noch mit der Umfangslinie des Bodens 20 verbundene Teil der Flächenstücke wird schließlich entlang der Umfangslinie rechtwinklig abgebogen, so daß das Markenteil 2 nach FIG 3 entsteht.

Bei dieser Ausgestaltung ist das Markenteil 2 über den Boden 20 mit dem Zahnteil 1 verbunden. Das Markenteil 2 ist so dimensioniert, daß es entlang der Drehachse 11 in das Zahnteil 1 eingeschoben werden kann und die Blechstreifen 21 in die Aussparungen 133 der Markenzähne 132 hineinragen (vgl. FIG 4).

Abweichend von dieser Ausführungsform der Erfindung kann das Markenteil auch als Blechzylinder ausgebildet sein, der in das Zahnteil 1 nach FIG 2 hineinpaßt und selbst am inneren Umfang des Zahnteils 1 befestigt wird. Der Blechzylinder hat L-förmige Einschnitte, die vom Rand aus parallel zu seiner Drehachse und dann senkrecht dazu, parallel zum Zylinderumfang, verlaufen. Durch diese Einschnitte entstehen rechteckig geformte Stücke, die aus der Zylinderwandung radial nach außen gebogen werden und - ähnlich wie in FIG 3 - Blechstreifen bilden, die in die Aussparungen 133 der Markenzähne 132 des Zahnteils 1 passen.

Begriffsliste

Geberrad
1 Zahnteil
11 Drehachse
12 Zentralbereich
13 Zahnrand
131 Zahn
132 Markenzahn
133 Aussparung
2 Markenteil
20 Boden
Markierstück
21 Blechstreifen
22 Halteblech
α Randwinkel

**Patentansprüche**

1. Geberrad für einen Winkelimpulsgeber,
- mit einer Drehachse (11),
- mit einem zu ihr koaxialen Zahnrand (13) mit Zähnen (131), von denen n Zähne (131) als Markenzähne (132) ausgebildet sind und hierzu Markierstücke aufweisen, wobei die Zähne (131) und die Markierstücke aus Materialien mit unterschiedlichen Wirbelstromverlusten bestehen,
- mit einem von dem Zahnrand (13) umschlossenen Zentralbereich (12), wobei Zentralbereich (12) und Zahnrad (13) ein Zahnteil bilden,
dadurch gekennzeichnet,
- daß das Zahnteil (1) aus Blech geformt ist,
- daß die n Markenzähne (132) je eine Aussparung (133) aufweisen, und
- daß die Markierstücke Blechstreifen (21) sind, die in die Aussparungen (133) hineinragen und die Bestandteil eines Markenteils (2) aus einem Blech sind, das mit dem Zahnteil (1) verbunden ist.

2. Geberrrad nach Anspruch 1, dadurch gekennzeichnet, daß der Zahnrand (13) mit einer Ebene senkrecht zur Drehachse (11) einen Winkel (α) zwischen 0° und 180° einschließt.

**Claims**

1. Generator wheel for an angular pulse generator, having a rotational axis (11), having a toothed edge (13), coaxial to said rotational axis, with teeth (131), of which n teeth (131) are constructed as marker teeth (132) and for this purpose have marker pieces, the teeth (131) and the marker pieces consisting of material with different eddy current losses, having a central region (12) enclosed by the toothed edge (13), said central region (12) and toothed edge (13) forming a toothed part, characterized in that the toothed part (1) is fashionend from sheet metal, in that the n marker teeth (132) each have a recess (133) and in that the marker pieces are metal strips (21) which project into the recesses (133) and which are components of a marker part (2) consisting of a metal sheet which is connected to the toothed part (1).

2. Generator wheel according to claim 1, characterized in that the toothed edge (13) encloses an angle (a) between 0° and 180° with respect to a plane perpendicular to the rotational axis (11).

**Revendications**

1. Roue pour générateur d'impulsions angulaires, comportant
- un axe de rotation (11),
- une couronne ou bordure dentée (13) coaxiale à cet axe et comportant des dents (131), parmi lesquelles n dents (131) sont agencées sous la forme de dents constituant des marques (130) et possèdent à cet effet des éléments de marquage, les dents (131) et les éléments de marquage étant réalisés en un matériau possédant des pertes variables par courant de Foucault différentes,
- une zone centrale (12) entourée par la couronne dentée (13), la zone centrale (13) et la couronne dentée (13) formant une partie dentée,
caractérisée par le fait
- que la partie dentée (1) est formée d'une tôle,
- que les n dents formant marques (132) possèdent chacune un évidement (133), et
- que les éléments de marquage sont des bandes de tôle (21), qui pénètrent dans les évidements (133) et font partie d'une partie formant porte-marques (2), formée d'une tôle reliée à la partie dentée (1).

2. Roue de générateur selon la revendication 1, caractérisée en ce que la couronne dentée (13) fait un angle (a) comprise entre 0° et 180° avec un plan perpendiculaire à l'axe de rotation (11).

FIG 1

FIG 2

FIG 3

FIG 4